Europäisches Patentamt

(19) European Patent Office

Office européen des brevets

(11) Publication number: **0 230 073 B1**

(12) **EUROPEAN PATENT SPECIFICATION**

(45) Date of publication of patent specification: 03.07.91   (51) Int. Cl.⁵: **G11B 5/31**, G11B 5/187

(21) Application number: **86202238.1**

(22) Date of filing: **11.12.86**

(54) Magnetic head for use in perpendicular registration.

(30) Priority: **20.12.85 NL 8503524**

(43) Date of publication of application:
**29.07.87 Bulletin  87/31**

(45) Publication of the grant of the patent:
**03.07.91 Bulletin  91/27**

(84) Designated Contracting States:
**DE FR GB NL**

(56) References cited:
**JP-A- 5 740 722**

**PATENT ABSTRACTS OF JAPAN, vol. 9, no.
37 (P-335)[1760], 16th February 1985; & JP-
A-59 178 610 (FUJITSU K.K.) 09-10-1984**

**IBM TECHNICAL DISCLOSURE BULLETIN, vol.
18, no. 5, October 1975, page 1311, Armonk,
New York, US; M.A. GRIMM: "Ferrite treat-
ment"**

**IEEE TRANSACTIONS ON MAGNETICS, vol.
MAG. 14, no. 2, March 1978, pages 76-81,
IEEE, New York, US; K. ASO: "Mechanically
induced anisotropy and its effect on mag-
netic permeability in single crystal ferrites"**

(73) Proprietor: **N.V. Philips' Gloeilampenfabrieken
Groenewoudseweg 1
NL-5621 BA Eindhoven(NL)**

(72) Inventor: **Enz, Ulrich Ernst Int. Octrooibureau
B.V.
Prof. Holstlaan 6
NL-5656 AA Eindhoven(NL)**
Inventor: **Zieren, Victor Int. Octrooibureau
B.V.
Prof. Holstlaan 6
NL-5656 AA Eindhoven(NL)**
Inventor: **Bongers, Piet Frans Int. Oc-
trooibureau B.V.
Prof. Holstlaan 6
NL-5656 AA Eindhoven(NL)**

(74) Representative: **Schrijnemaekers, Hubert
Joannes Maria et al
Internationaal Octrooibureau B.V. Prof. Hol-
stlaan 6
NL-5656 AA Eindhoven(NL)**

PATENT ABSTRACTS OF JAPAN, vol. 9, no. 133 (P-362)[1856], 8th June 1985; & JP-A-60 15 810 (MITSUBISHI DENKI K.K.) 26-01-1985

PATENT ABSTRACTS OF JAPAN, vol. 8, no. 75 (P-266)[1512], 7th April 1984; & JP-A-58 220 233 (KIYANON DENSHI K.K.) 21-12-1983

PATENT ABSTRACTS OF JAPAN, vol. 2, no. 99, page 5035E78, 17th August 1978; & JP-A-53 65 714 (NIPPON DENSHIN DENWA) 12-06-1978

PATENT ABSTRACTS OF JAPAN, vol. 2, no. 149, page 9441E78, 13th December 1978; & JP-A-53 116 809 (HITACHI SEISAKUSHO K.K.) 12-10-1978

## Description

The invention relates to a magnetic head for use in perpendicular registration, comprising a magnetic core having two core limbs which have gap boundary faces between which a gap is formed and each of which also has a contact face for co-operation with a magnetic medium, a thin film of a magnetic material having a higher saturation magnetization and a preferably higher magnetic permeability than the magnetic material of the core limbs, which film is provided in the said gap on the gap boundary face of one of the said core limbs and extends as far as the contact face of said core limb, and a coil which is provided via a coil aperture in the magnetic core around at least the last-mentioned core limb.

For an ideal magnetization of the magnetic registration medium in the case of perpendicular registration it is necessary that the main component of the magnetic field coming from the magnetic head is as much as possible at right angles to the magnetic registration medium. A magnetic tape or a magnetic disc may serve as a registration medium.

A previously proposed magnetic head for perpendicular registration is known from the Japanese Kokai JP 57-40722. The known magnetic head comprises a thin film of a material having a high magnetic permeability which is secured to one of the ends of the magnetic core. A magnetic gap is present between the said film and the other end of the magnetic core. The magnetic core consists of a magnetic part which forms the largest part of the core and is present on either side of the gap, and a small non-magnetic part. The non-magnetic part is provided on the magnetic part and extends from the boundary face of the two parts to the contact face of the magnetic head, whilst the said thin film is partly secured to the non-magnetic part.

The known magnetic head has a number of drawbacks some of which are in the field of manufacture. One of the drawbacks is that the magnetic head is built up from a magnetic and a non-magnetic part, which are composed through an adhesion technique. The adhesion between the magnetic part generally consisting of a ferrite and the non-magnetic part consisting of, for example, glass or ceramic material sometimes creates problems. Moreover, it is disadvantageous for the thin film to be provided on an assembly of two different substrate materials due to the high quality which m is imposed on the thin film.

Since the magnetic registration medium and the magnetic head are being displaced with respect to each other during use of the magnetic head, with the registration medium sliding on the contact face of the magnetic head, wear of the magnetic head occurs at the area of the contact face. Owing to this wear the thickness of non-magnetic part continually decreases so that at a given moment the non-magnetic part will have locally disappeared completely. The registration medium then locally comes in direct contact with the magnetic part of the magnetic core adjoining the non-magnetic part so that the envisaged effect, namely the concentrated emergence of the magnetic field at the thin film is lost owing to the occurring losses.

It is an object of the invention to provide an improved magnetic head for perpendicular registration which can easily be manufactured and has a long lifetime.

To this end the magnetic head according to the invention is characterized in that at least the core limb on which the said thin film is provided consists as far as the contact face of a ferrite in which a thin zone extending along the contact face has a low magnetic permeability due to internal mechanical stresses, the ferrite having such a high magnetostriction that during use of the magnetic head the friction occurring on the contact face causes internal mechanical stresses ensuring that said thin zone (z) is renewed. Magnetostriction is herein understood to mean the magneto-elastic phenomenon which occurs in ferromagnetic materials and in which the magnetic field strength of specimens of ferromagnetic materials changes when these specimens are subjected to mechanical stresses.

An advantage of the magnetic head according to the invention is that the core limbs can each be manufactured entirely from one and the same magnetic material.

It has been found that permanent mechanical stresses are generated in a thin film extending along the contact face due to mechanical operations such as sawing and polishing performed during the manufacture of the magnetic head. The invention makes use of this phenomenon in a surprising way by utilizing these stresses to create a non-magnetic zone or at least a zone in which the magnetic permeability of the material present is small. By using ferrites having a high magnetostriction for the core limb on which the said thin film is provided the said zone is actually formed automatically during the manufacture of the magnetic head.

It should be noted that it is known from JP-A-53 65714 to lap the faces of two core halves to create a magnetic gap.

Furthermore it has been found by experiment that during use of the magnetic head the friction occurring on the contact face also causes permanent internal mechanical stresses in the ferrite of the above-mentioned core limb. These stresses ensure that the said zone moves, as it were, along with the contact face being displaced by wear. This effect has the important advantage that a zone of a material having a low magnetic permeability is continuously present along the contact face of the magnetic head core limb supporting the thin film. The magnetic head will therefore operate satisfactorily even after long use.

A preferred embodiment of the magnetic head according to the invention is characterized in that the said ferrite is an MnZnFeII ferrite. This is understood to comprise a group of ferromagnetic materials mainly consisting of sintered mixtures of oxides of the bivalent metals manganese and zinc with $Fe_2O_3$. In connection with the required magnetostriction the share of iron in the MnznFeII ferrite will preferably be large.

A further embodiment of the magnetic head according to the invention with which satisfactory results are also achieved is characterized in that the said ferrite is an NiZn ferrite.

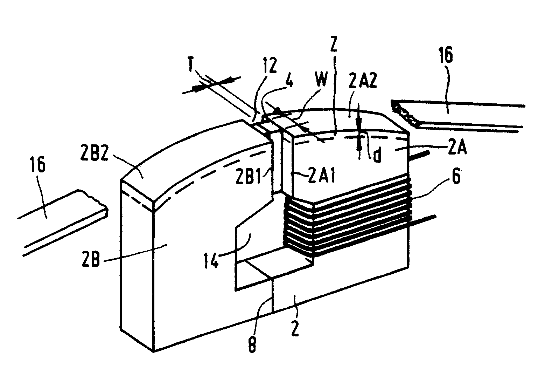

The invention will be described in greater detail with reference to the drawing in which the Figure shows a perspective elevational view of a magnetic head according to the invention.

The magnetic head shown is intended for use in perpendicular registration and comprises a magnetic core 2, a thin film 4 and a coil 6. The magnetic core 2 consists of two core limbs 2A and 2B of a crystalline MnZnFeII ferrite which are sealed together in the region 8 by means of a sealing material such as glass. It is alternatively possible to form only one of the two core limbs, namely the core limb 2A from the said ferrite and the other core limb 2B from a different ferrite, for example, MnZn ferrite. The two core limbs 2A and 2B each have gap boundary faces 2A1 and 2B1 and contact faces 2A2 and 2B2, respectively. A gap 12 and the said thin film 4 are present between the gap boundary faces 2A1 and 2B1. The film 4, which for drawing technical reasons is shown much too thick in the Figure, is secured to the gap boundary face 2A1 and consists of a magnetic material, preferably a magnetic alloy having a considerably higher saturation magnetization and a larger magnetic permeability than the MnZnFeII ferrite of the core limb 2A. The thickness T of the film 4 which is provided, for example, by means of sputtering on the core limb 2A may be between 50 and 5000 nm. The width W on the film 4 defines the track width. A layer of a non-magnetizable material such as glass or quartz is present between the film 4 and the gap boundary face 2B1. This layer may serve to seal the core limbs 2A and 2B together.

A zone Z having a thickness d in which the MnZnFeII ferrite has only a small magnetic permeability due to internal stresses adjoins the contact faces 2A2 and 2B2 obtained by mechanical operations such as polishing. The thickness d of the zone Z has a value which is of the order of the thickness T of the film 4. The zone Z which will generally be several hundred nm (several thousand Ångström units) in practice is automatically formed during manufacture and use of the magnetic head and is sufficient to counteract unwanted flux losses in an adequate manner.

The coil 6 is provided via an aperture 14 in the magnetic head around the core limb 2A. Upon energizing the coil 6 the magnetic flux induced in the core limb 2A will leave the magnetic head mainly via the thin film 4. During operation the magnetic field lines will thereby be directed substantially perpendicularly to a magnetic registration medium 16 at the area of the thin film and they will be guided by this registration medium to the core limb 2B of the magnetic head.

The invention is of course not limited to the embodiment shown. Under given circumstances it may be advantageous to manufacture only the core limb on which the thin film is provided from MnZnFeII ferrite. Furthermore it is not necessary that the coil is provided around only one of the two core limbs.

## Claims

1. A magnetic head for use in perpendicular registration, comprising
   - a magnetic core (2) having two core limbs (2A, 2B) which have gap boundary faces (2A1, 2B1) between which a gap (12) is formed and each of which also has a contact face (2A2, 2B2) for cooperation with a magnetic medium,
   - a thin film (4) of a magnetic material having a higher saturation magnetization and a preferably higher magnetic permeability than the magnetic material of the core limbs, which film is provided in the said gap on the gap boundary face of one of the said core limbs and extends as far as the contact face of said core limb, and
   - a coil (6) which is provided via a coil aperture (14) in the magnetic core around at least the last-mentioned core limb,
   characterized in that
   at least the core limb (2A) on which the said thin film (4) is provided consists as far as the contact face (2A2) of a ferrite in which a thin zone (Z) extending along the contact face has a low magnetic permeability due to internal mechanical stresses, the ferrite having such a high magnetostriction that during use of the magnetic head the friction occurring on the contact face causes internal mechanical stresses ensuring that said thin zone (z) is renewed.

2. A magnetic head as claimed in Claim 1, characterized in that the said ferrite is an MnZnFeII ferrite.

3. A magnetic head as claimed in Claim 1, characterized in that the said ferrite is an NiZn ferrite.

**Revendications**

1. Tête magnétique destinée à être utilisée dans l'enregistrement perpendiculaire comportant
   - un noyau magnétique (2) ayant deux branches du noyau (2A, 2B) présentant des faces de limitation de l'entrefer (2A1, 2B1) entre lesquelles est formé un entrefer (12) et dont chacune présente également une surface de contact (2A2, 2B2) pour coopérer avec un support magnétique,
   - une couche mince (4) en matériau magnétique ayant une magnétisation de saturation plus élevée et, de préférence, une perméabilité magnétique plus élevée que le matériau magnétique des branches du noyau, cette couche étant prévue dans ledit entrefer, sur la face de limitation de l'entrefer de l'une desdites branches du noyau et s'étendant jusqu'à la surface de contact de ladite branche du noyau, et
   - une bobine (6) qui, à travers une ouverture d'enroulement (14) pratiquée dans le noyau magnétique, est enroulée au moins autour de la branche du noyau mentionnée en dernier lieu,
   caractérisée en ce que
   au moins la branche (2A) du noyau sur laquelle est prévue ladite couche mince (4) est constituée jusqu'à la surface de contact (2A2) par une ferrite dans laquelle une zone mince (2) s'étendant le long de la surface de contact présente une faible perméabilité magnétique due à des contraintes mécaniques internes, la ferrite ayant une magnétostriction d'une valeur tellement élevée que, durant l'utilisation de la tête magnétique, la friction se produisant sur la surface de contact provoque des contraintes mécaniques internes qui assurent le renouvellement de ladite zone mince (Z).

2. Tête magnétique selon la revendication 1, caractérisée en ce que ladite ferrite est une ferrite MnZnFeII.

3. Tête magnétique selon la revendication 1, caractérisée en ce que ladite ferrite est une ferrite NiZn.4

**Ansprüche**

1. Magnetkopf zum Gebrauch bei senkrechter Aufzeichnung, mit
   - einem Magnetkern (2) mit zwei Kernschenkeln (2A, 2B) mit Spaltbegrenzungsflächen (2A1, 2B1), zwischen denen ein Spalt (12) gebildet ist und wobei diese Flächen ebenfalls je eine Kontaktfläche (2A2, 2B2) aufweisen zum Zusammenarbeiten mit einem magnetischen Medium,
   - einem dünnen Film (4) aus magnetischem Werkstoff mit einer höheren Sättigungsmagnetisierung und vorzugsweise einer höheren magnetischen Permeabilität als der magnetische Werkstoff der Kernschenkel, wobei dieser Film in dem genannten Spalt auf der Spaltbegrenzungsfläche eines der genannten Kernschenkel angeordnet ist und sich bis an die Kontaktfläche des genannten Kernschenkels erstreckt, und
   - einer Spule (6), die durch eine Spulenöffnung (14) in dem Magnetkern um wenigstens den letztgenannten Kernschenkel angeordnet ist,
   dadurch gekennzeichnet, daß
   wenigstens derjenige Kernschenkel (2A), auf dem der genannte dünne Film (4) vorgesehen ist, bis an die Kontaktfläche (2A2) aus einem Ferrit besteht, wobei eine dünne Zone (Z), die sich längs der Kontaktfläche erstreckt, durch innere mechanische Spannungen eine niedrige magnetische Permeabilität aufweist, wobei das Ferrit eine derart hohe Magnetostriktion aufweist, daß im Gebrauch des Magnetkopfes die an der Kontaktfläche auftretende Reibung innere mechanische Spannungen verursacht, die gewährleisten, daß die genannte dünne Zone (Z) erneuert wird.

2. Magnetkopf nach Anspruch 1, dadurch gekennzeichnet, daß das genannte Ferrit ein MnZnFeII-Ferrit ist.

3. Magnetkopf nach Anspruch 1, dadurch gekennzeichnet, daß das genannte Ferrit ein NiZn-Ferrit ist.